# EUROPEAN PATENT APPLICATION

(11) **EP 1 505 828 A2**
(43) Date of publication of application: **09.02.2005**
(21) Application number: 04018110.9
(22) Date of filing: 30.07.2004
(51) Int. Cl.: H04N 5/60

(54) **Information output control system, information output control method, and information output control program**

(30) Priority: 31.07.2003 JP 2003204358
(71) Applicant: Pioneer Corporation, Tokyo-to (JP)
(72) Inventor: Yanoguchi, Koji c/o Pioneer Corporation, Tokorozawa-shi Saitama-ken (JP); Nakamura, Masahiko c/o Pioneer Corporation, Tokorozawa-shi Saitama-ken (JP)
(74) Representative: Reinhard - Skuhra - Weise & Partner GbR

(57) **Abstract**

In an AV system which has a display (2) capable of outputting image and sound, and an amplifier (1) capable of outputting sound,
a control section is provided which restricts an output mode of a primary sound on the first information output device, wherein the primary sound is outputted concurrently with a primary image on the display, upon switching from the primary image formerly outputted on the display to another image to be outputted on the display and outputting another sound from the amplifier concurrently with the another image.

## Description

### BACKGROUND OF THE INVENTION

### Field of the Invention

The present invention relates to an information output control system, an information output control method, and an information output control program. To be specific, the present invention relates to an information output control system for controlling an output mode for outputting information of different attributes at the same time, an information output control method therefor, and an information output control program used for the output control of the information.

### Related Art

In recent years, methods are available for outputting a sound signal and a video signal, which are outputted from a plurality of audio visual (hereinafter, simply referred to as "AV") devices (e.g., a DVD (Digital Versatile Disc) player, a set-top box, and so on), respectively to an amplifier for reproducing the sound signal and a display for outputting an image, permitting the enjoyment of a sound and an image corresponding to each other. In this case, the sound signal is outputted to the amplifier which is connected to a speaker and is optimized for reproducing the sound signal, and the video signal is outputted to the display, so that a sound and an image corresponding to each other can be enjoyed with higher performance in the most desirable manner.

Some displays comprise speakers for releasing corresponding sound along with displayed images. In this case, the volume of the speaker in the display has to be adjusted on the display separately from the volume adjustment on the amplifier.

However, according to the conventional configuration, in the case where a sound based on sound information from a DVD player is set so as to be outputted from the speaker connected to the amplifier, when another sound is released from the speaker of the display at that time, in order to enjoy only the sound from the speaker connected to the amplifier, the volume of the speaker in the display has to be turned down or a so-called muting operation (an operation of a muting device) has to be performed on an operation section of the display.

Further, when the muting operation is performed, an indication such as "mute" may be continuously shown on the display during the muting operation. In this case, visibility for a displayed image is affected.

### SUMMARY OF THE INVENTION

The present invention is devised in view of the problems. An object of the present invention is to provide a new information output control system, a new information output control method, and a new information output control program which can solve the problems in the related art. Another object of the present invention is to provide an information output control system, an information output control method, and an information output control program whereby the output of a sound on a display can be controlled with a simple configuration and operation without affecting the visibility of the display.

In order to solve the problems, an information output control system according to the first aspect of the present invention is provided for an information output system which includes a first information output device capable of outputting first information having a first attribute and outputting second information having a different attribute from the first information, and a second information output device capable of outputting the second information, wherein the information output control system comprises a restricting device which restricts an output mode of an primary second information on the first information output device, the primary second information being outputted concurrently with a primary first information on the first information output device, upon switching from the primary first information formerly outputted on the first information output device to another first information to be outputted on the first information device and outputting another second information on the second information output device concurrently with the another first information.

In order to solve the problems, in another aspect of the invention, the information output control system further comprises:
a storage device for storing an output mode information which indicates the output mode immediately before the output mode is restricted by the restricting device, and
a resumption device which resumes, based on the stored output mode information, the output mode immediately before the output mode of the primary second information which has been restricted by the restricting device on the first information output device, upon completing the output of the another second information on the second information outputting device, the another second information being to be outputted concurrently with the another first information.

In the third aspect of the invention, the disclosed is the information output control system wherein the first information is video information and the second information is sound information, and
the restricting device reduces an output level of the sound information serving as the output mode.

In the fourth aspect of the invention, the disclosed is the information output control system wherein the restricting device stops an output of the sound information on the first information output device.

In the fifth aspect of the invention, it is disclosed that the information output control system further comprises a connecting device for directly connecting the first information output device and the second information output device,
wherein the restricting device is provided into the second information output device,
the restricting device outputs restriction information for restricting the output mode to the first information output device via the connecting device when restricting the output mode of the primary second information on the first information output device, and
the first information output device restricts the output mode based on the restriction information.

In order to solve the problems, a second information output device according to the sixth aspect of the present invention is provided, which is included in the information output system mentioned above, and which comprises the regulating device.

In order to solve the problems, a first information output device according to the seventh aspect of the present invention is provided, which is included in the information output system mentioned above, and which restricts the output mode based on the restriction information.

In order to solve the problems, an information output control method according to the eighth aspect of the present invention is performed in an information output system which comprises a first information output device capable of outputting first information having a first attribute and outputting second information having a different attribute from the first information, and a second information output device capable of outputting the second information,
wherein the method comprises a restricting step of restricting an output mode of an primary second information on the first information output device, the primary second information being outputted concurrently with a primary first information on the first information output device, upon switching from the primary first information formerly outputted on the first information output device to another first information to be outputted on the first information device and outputting another second information on the second information output device concurrently with the another first information.

In order to solve the problems, an information output control program according to the ninth aspect of the present invention causes a computer to act as a restricting device,
wherein the computer is included in an information output control system which comprises a first information output device capable of outputting first information having a first attribute and outputting second information having a different attribute from the first information, and a second information output device capable of outputting the second information, and
wherein the computer as the restricting device restricts an output mode of an primary second information on the first information output device, wherein the primary second information is outputted concurrently with a primary first information on the first information output device, upon switching from the primary first information formerly outputted on the first information output device to another first information to be outputted on the first information device, and outputting another second information on the second information output device concurrently with the another first information.

### BRIEF DESCRIPTION OF THE DRAWINGS

FIG. 1 is a block diagram showing the schematic configuration of an AV system according to an embodiment;
FIG. 2 is a flowchart (I) showing the distribution of volume control information;
FIG. 3 is a flowchart (II) showing the reception of volume control information; and
FIG. 4 is a block diagram showing the schematic configuration of an AV system according to a modified embodiment.

### DETAILED DESCRIPTION OF THE PREFERRED EMBODIMENTS

A preferred embodiment of the present invention will be described below in accordance with the accompanying drawings.

The following embodiment is an embodiment where the present invention is applied to an AV system which includes a display capable of receiving airwaves and outputting an image and sound transmitted through the airwaves, and a DVD player capable of outputting video information and sound information, and wherein an image transmitted through the airwaves and an image corresponding to the video information from the DVD player are outputted to the display and sound information from the DVD player via an amplifier is outputted from speaker(s).

### (I) Embodiment

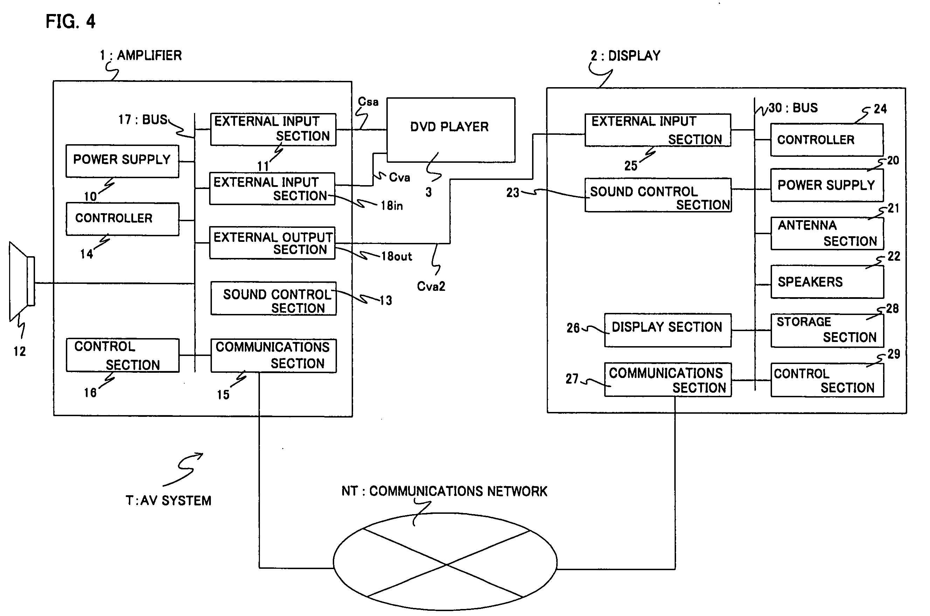

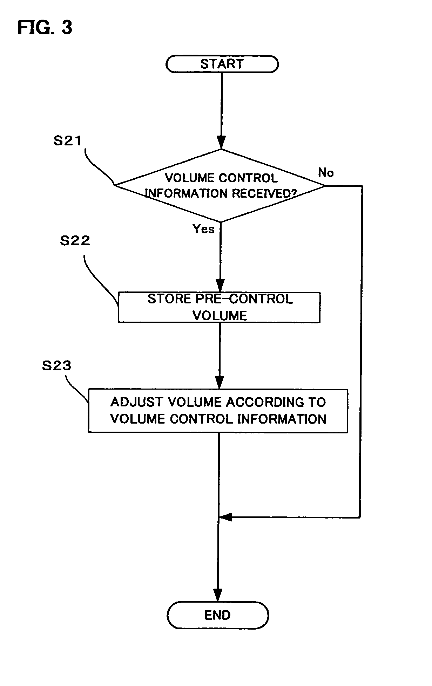

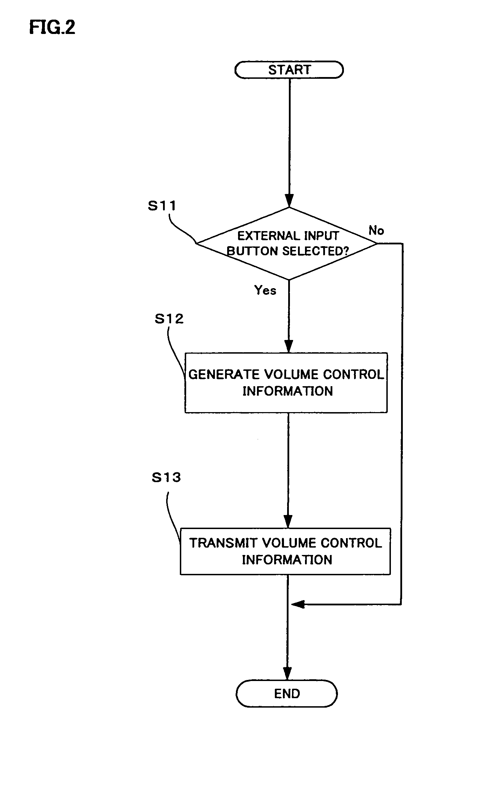

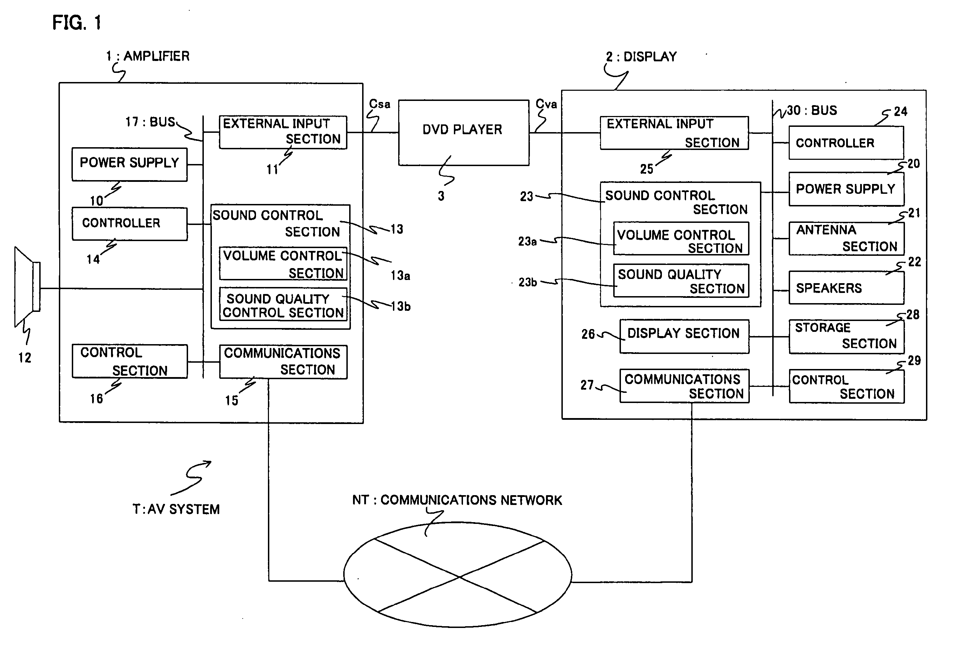

Now, referring to FIGS. 1 to 3, a first embodiment of the present will be described below.

### (A) The overall configuration and function of AV system

Referring to FIG. 1, the configuration and function of the AV system according to the present embodiment will be described below. FIG. 1 is a block diagram showing the schematic configuration of the AV system.

As shown in FIG. 1, an AV system T of this embodiment comprises an amplifier 1 serving as a second information output device, a display 2 serving as a first information output device, and a DVD player 3.

The amplifier 1 and the display 2 are connected to each other via the communications network NT such as a local area network (LAN). The amplifier 1 is connected to the DVD player 3 via a code Csa and the display 2 is connected to the DVD player 3 via a code Cva.

Sound information reproduced as the another second information by the DVD player 3 is outputted through the code Csa to a hereinafter described external input section 11 provided in the amplifier 1, while the video information reproduced as the another first information by the DVD player 3 is outputted trough the code Cva to an external input section 25 provided in the display 2.

### (B) Detailed configuration and function of the amplifier

The detailed configuration and function of the amplifier 1 will be described below.

The amplifier 1 is configured as a so-called AV amplifier which adjusts the quality such as volume, tone, or balance of an inputted sound signal and outputs a desired sound signal to hereinafter described speakers 12 connected to the amplifier 1.

To be specific, as shown in FIG. 1, the amplifier 1 comprises a power supply 10, the external input section 11, a sound control section 13 including a volume control section 13a and a sound quality control section 13b, a controller 14, a communications section 15, and a control section serving as a restricting device for controlling the above other constituents. The constituents and the external speakers 12 are connected via a bus 17 in such a manner as to transmit and receive information to and from one another.

As described above, the sound information output terminal of the DVD player 3 is connected to the external input section 11 via the code Csa. Sound information from the DVD player 3 is inputted to the amplifier 1 via the code Csa and a sound is released from the speakers 12 after adjustments as hereinafter described are made to the sound information.

The volume control section 13a in the sound control section 13 is provided for controlling the volume of a sound to be released from the speakers 12. The sound quality control section 13b is provided for controlling quality such as the loudness and tone of the sound to be released.

For example, in the case of a plurality of devices connected to the external input section 11, when one of the devices is selected by the controller 14 which is constituted of an operational remote controller and so on, the connection of the constituents is controlled by the control section 16 so that a sound is released based on the sound information outputted from the selected device.

In the present embodiment, a judgment is made whether an external input button (not shown) provided in the controller 14 is selected or not. When the external input button is selected, a control is performed so as to release a sound from the speakers 12 based on sound information from the DVD player 3, and a volume control information is generated under the control of the control section 16 and is transmitted to the display 2 via the communications section 15. The volume control information is used for controlling the speakers and so on of the display 2 in such a manner as to interrupt a sound having been released from the display 2 until then.

In the display 2 having received the volume control information, a control is performed based on the volume control information so as to turn down the volume of the hereinafter described speakers integrated into the display 2 to zero. Thus, a sound from the speakers 12 connected to the amplifier 1 can be heard without being affected by a sound outputted from the display 2.

The communications section 15 transmits the volume control information to the display 2 via the communications network NT.

Regarding these operations, the control section 16 comprises a CPU (Central Processing Unit), working RAM (Random Access Memory) , a ROM (Read Only Memory) for storing data and various control programs including a communications program, and an oscillator circuit. In response to an operation signal from an operation section (not shown), the control section 16 generates control information for controlling the constituents to perform an operation corresponding to operation information included in the operation signal, and outputs the control information to the corresponding constituent via the bus 17.

When the controller 14 selects the sound emission based on sound information from the DVD player 3, the control section 16 generates the volume control information and transmits the information to the display 2 via the communications section 15 and the communications network NT.

### (C) The detailed configuration and function of the display

The detailed configuration and function of the display 2 will be described below.

The display 2 of FIG. 1 may be a plasma display, a CRT (Cathode Ray Tube) , or a liquid crystal display. The display 2 can show a moving image or a static image which corresponds to inputted video information, and output a sound corresponding to the image. To be specific, the display 2 comprises a power supply 20, an antenna 21, speakers 22, a sound control section 23 including a volume control section 23a and a sound quality control section 23b, a controller 24, an external input section 25, a display section 26, a communications section 27, a storage section 28 serving as a storage device, and a control section 29 serving as a resumption device for controlling the constituents. The constituents are connected via a bus 30 in such a manner as to transmit and receive information to and from one another.

In this case, the antenna 21 receives airwaves from a broadcast station and so on, a sound corresponding to sound information transmitted through the received airwaves is released from the speakers 22, and an image corresponding to transmitted video information is displayed on the display section 26.

The volume control section 23a of the sound control section 23 is provided for controlling the volume of a sound based on sound information received by the antenna 21. The sound quality control section 23b is provided for controlling quality such as the loudness and tone of the sound to be released.

More concretely, when the user sets a desired volume and sound quality by using the controller 24 which comprises a volume knob and treble/bass knobs (not shown) , the volume control section 23a and the sound quality control section 23b work so that the speakers 22 produces a sound corresponding to the set volume and sound quality.

Additionally, when the communications section 27 receives the volume control information from the amplifier 1, the volume control section 23a of the present embodiment turns down the volume of a sound released from the speakers 22 to zero according to the volume control information.

On one hand, the storage section 28 stores, as a pre-control volume, the volume of a sound from the speakers 22 immediately before the volume is controlled based on the volume control information. When any operation is performed with respect to the output condition of the speakers 22, for example, when the user makes an operation so as to turn back the volume to the original one by using the controller 24, the volume control section 23a controls the volume so as to reset to the original volume based on the stored pre-control volume. With this function, when the user desires to produce a sound again based on sound information received through the antenna 21, it is possible to instantly reset to the original volume without readjusting the volume with the controller 24.

On the other hand, video information is inputted from the DVD player 3 to the external input section 25 via the code Cva.

The display section 26 may be the plasma display, CRT display, or liquid crystal display. The display section 26 can show an image corresponding to video information received through the antenna 21 and video information inputted through the external input section 25.

The communications section 27 receives the volume control information from the amplifier 1 via the communications network NT.

In order to be able to perform these operations, the control section 29 comprises a CPU, working RAM, a ROM for storing data and various control programs including a communications program, and an oscillator circuit, etc. In response to an operation signal from the operation section (not shown), the control section 29 generates control information for controlling the constituents to perform an operation corresponding to operation information included in the operation signal, and outputs the information to the corresponding constituent via the bus 30.

Further, when the communications section 27 receives the volume control information, the control section 29 controls, according to the volume control information, the volume of a sound to be emitted from the speakers 22 based on the sound information having been received through the antenna 21.

### (D) Embodiment of volume control

Referring to FIGS. 1 to 3, the volume control according to the present invention will be specifically described below.

FIG. 2 is a flowchart showing volume control performed by the control section 16 of the amplifier 1 according to the present invention. FIG. 3 is a flowchart showing volume control performed by the control section 29 of the display 2 according to the present invention.

Referring to FIG. 2, the following will first discuss the output of the volume control information from the amplifier 1 to the display 2.

The processing shown in the flowchart of FIG. 2 is performed based on a volume control information providing program which is stored beforehand in the ROM (not shown) of the control section 16.

In the volume control, as shown in FIG. 2, the control section 16 first decides whether or not the external input button is selected on the controller 14 (step S11). When it is decided that the external input button is not selected, the processing is ended (step S11: No) . On the other hand, when the control section 16 decides that the external input button is selected (step S11: Yes), the volume control information is generated (step S12) and the generated volume control information is transmitted to the display 2 via the communications section 15 and the communications network NT (step S13), so that the volume control is completed in the amplifier 1.

In accordance with the above mentioned operation, once a selection is made in the amplifier 1 to emit a sound based on sound information from the DVD player 3 through the speakers 12, volume control information is transmitted to the display 2 to interrupt a sound having been released from the display 2 until then.

Referring to FIG. 3, the following will describe volume control performed in the display 2 having received the volume control information from the amplifier 1.

The processing shown in the flowchart of FIG. 3 is performed by the control section 29 based on a selection control program which is stored beforehand in the ROM (not shown) of the control section 29.

In the volume control, as shown in FIG. 3, the control section 29 decides whether or not the communications section 27 has received the volume control information (step S21). When it is decided that the volume control information has not been received (step S21: No) , the volume control of the embodiment is ended. On the other hand, when it is decided that the volume control information has been received (step S21: Yes) , the storage section 27 stores, as a pre-control volume, a sound come out of the speakers 22 at the time of reception (step S22).

Based on the received volume control information, the volume control section 23a turns down the volume to 0 (step S23) .

As described above, according to the volume control performed in the AV system T of the present embodiment, when the controller 14 selects the sound emission based on sound information from the DVD player 3 in the amplifier 1, volume control information for interrupting a sound having been produced on the display 2 until then is transmitted to the display 2, so that only a sound from the speakers 12 can be heard without being affected by a sound from the display 2.

In the present embodiment, volume control information for interrupting the sound emission is used. Alternatively, when the volume control information is received by the display 2, control may be performed to set a sound come out of the speakers 22 at a predetermined volume which is stored beforehand.

In the present embodiment, the volume control information is generated when the controller 14 selects the sound emission based on sound information from the DVD player 3. In addition, when an operation of some kind is performed by the controller 14 with respect to the output condition of the speakers 12 of the amplifier 1, volume control information may be generated and may be transmitted to the display 2 via the communications section 15.

Further, in the present embodiment, the display 2 has the storage section 28 which stores a volume immediately before the volume control. Thus, when any operation, such as an operation of resetting volume to the original one by using the controller 24, is performed with respect to the output condition of the speakers 22, the original volume is instantly restored. In an alternative way, the control may be performed so that the volume is returned gradually to the original one under the control of the control section 29.

In the present embodiment, when an operation is performed to produce a sound based on sound information from the DVD player 3 which is connected to the amplifier 1 via the code Csa, the volume control information is transmitted to the display 2 connected to the amplifier 1 via the communications network NT. Alternatively, the volume control information may be transmitted from the display 2 to the amplifier 1.

Moreover, it is possible to construct the system so that the volume control information is transmitted to all the other devices connected via the communications network NT when the sound control section 13 is provided into the amplifier 1. With this configuration, when the amplifier 1 is operated, a sound is produced only from the speakers 12 provided on the amplifier 1. That is, a sound is not released from speakers provided on the other devices connected to the amplifier 1 via the communications network NT, thereby eliminating the influence of sounds from the other devices.

### (II) Modified Embodiment

Referring to FIG. 4, a modified embodiment of the present invention will be described below. FIG. 4 is a block diagram showing the schematic configuration of an AV system according to this modified embodiment. The same constituents as the aforementioned first embodiment are indicated by the same reference numerals and the detailed explanation thereof is omitted.

As shown in FIG. 4, in an AV system T of the modified embodiment, the sound information and the video information of a DVD player 3 are both inputted to an amplifier 1 via codes Csa and Cva, and the video information is inputted from the amplifier 1 to a display 2 via a code Cva2.

In this case, the amplifier 1 comprises an external input section 18in for inputting video information and an external output section 18out for outputting video information. Video information from the DVD player 3 is inputted to the amplifier through the external input section 18in, and then it is subjected to image processing by the video control program of the control section 16 in the amplifier 1. The processed video information is outputted from the external output section 18out of the amplifier to an external input section 25 of the display 2 via the code Cva2.

In this configuration, similarly, once a controller 14 selects the sound emission based on sound information from the DVD player 3 in the amplifier 1, a sound come out of speakers 22 of the display 2 is instantly interrupted and the image corresponding to the now selected sound is displayed on a display section 26 of the display 2, so that this modified embodiment is applicable as the foregoing embodiment.

Further, the present invention is also applicable when a connection is made so as to input sound information from the DVD player 3 to an external input section (not shown) of the display 2. In this case, control is performed so as to interrupt the sound come out of the speakers 22 of the display 2 when starting the sound emission from speakers 12 connected to the amplifier 1. Thus, a sound based on sound information is not released from both of the speakers 12 of the display 2 and the speakers 22 of the display 2, and a sound is heard only from the speakers 12 of the amplifier 1.

Furthermore, the following configuration is also available: a program corresponding to the flowcharts of FIGS. 2 and 3 is recorded on an information recording medium such as a flexible disk or a hard disk or may be acquired and recorded via networks such as the Internet, and a general purpose computer such as a microcomputer is caused to read and execute the program, so that the computer can act as the control section 16 or 29 of the present embodiment.

The present invention has been described in detail by way of illustrations and embodiments for purposes of clarity and understanding. However, it will be obvious that the present invention is not limited to the embodiments described herein, and that certain changes and modifications may be practiced within the scope of the invention, as limited only by the scope of the appended claims.

## Claims

1. An information output control system which is provided for an information output system which comprises a first information output device capable of outputting first information having a first attribute and outputting second information having a different attribute from the first information, and a second information output device capable of outputting the second information;
wherein the information output control system comprises:
a restricting device which restricts an output mode of an primary second information on the first information output device, wherein the primary second information is outputted concurrently with a primary first information on the first information output device, upon switching from the primary first information formerly outputted on the first information output device to another first information to be outputted on the first information device and outputting another second information on the second information output device concurrently with the another first information.

2. The information output control system according to claim 1, wherein the control system further comprises:
a storage device for storing an output mode information which indicates the output mode immediately before the output mode is restricted by the restricting device, and
a resumption device which resumes, based on the stored output mode information, the output mode immediately before the output mode of the primary second information which has been restricted by the restricting device on the first information output device, upon completing the output of the another second information on the second information outputting device, the another second information being to be outputted concurrently with the another first information.

3. The information output control system according to claim 1 or 2, wherein the first information is video information and the second information is sound information, and
the restricting device reduces an output level of the sound information serving as the output mode.

4. The information output control system according to claims 3, wherein the restricting device stops an output of the sound information on the first information output device.

5. The information output control system according to any one of claims 1 to 4,
wherein the control system further comprises a connecting device for directly connecting the first information output device and the second information output device,
wherein the restricting device is provided into the second information output device,
wherein the restricting device outputs restriction information for restricting the output mode to the first information output device via the connecting device when restricting the output mode of the primary second information on the first information output device, and
wherein the first information output device restricts the output mode based on the restriction information.

6. A second information output device which is included in the information output system mentioned in claim 5, wherein the device comprises the regulating device.

7. A first information output device which is included in the information output system mentioned in claim 5, wherein the device restricts the output mode based on the restriction information.

8. An information output control method which is performed in an information output control system which comprises a first information output device capable of outputting first information having a first attribute and outputting second information having a different attribute from the first information, and a second information output device capable of outputting the second information,
wherein the method comprises a restricting step of restricting an output mode of an primary second information on the first information output device, wherein the primary second information is outputted concurrently with a primary first information on the first information output device, upon switching from the primary first information formerly outputted on the first information output device to another first information to be outputted on the first information device and outputting another second information on the second information output device concurrently with the another first information.

9. An information output control program which comprises a function causing a computer to act as a restricting device,
wherein the computer is included in an information output control system which comprises a first information output device capable of outputting first information having a first attribute and outputting second information having a different attribute from the first information, and a second information output device capable of outputting the second information, and
wherein the computer as the restricting device restricts an output mode of an primary second information on the first information output device, wherein the primary second information is outputted concurrently with a primary first information on the first information output device, upon switching from the primary first information formerly outputted on the first information output device to another first information to be outputted on the first information device, and outputting another second information on the second information output device concurrently with the another first information.
